# EUROPEAN PATENT SPECIFICATION

(11) **EP 1 413 786 B1**
(45) Date of publication and mention of the grant of the patent: **22.10.2008**
(21) Application number: 03024458.6
(22) Date of filing: 23.10.2003
(51) Int. Cl.: F16D 3/12, F16F 15/10

(54) **Torsional vibration damper**
Drehschwingungsdämpfer
Amortisseur d'oscillations de torsion

(30) Priority: 23.10.2002 US 420257 P
(43) Date of publication of application: 28.04.2004
(73) Proprietor: Bombardier-Rotax GmbH & Co. KG, 4623 Gunskirchen (AT)
(72) Inventor: Kusel, Rudolf, 4600 Thalheim bei Wels (AT)
(74) Representative: Patentanwälte Dr. Solf & Zapf

(56) References cited:
- DE-A- 4 115 243
- DE-C- 3 527 034
- GB-A- 203 010
- US-A- 2 174 342
- US-A- 3 022 679
- US-B1- 6 296 096

## Description

### CROSS REFERENCE TO RELATED APPLICATION

### BACKGROUND OF THE INVENTION

### 1. Field of the Invention

The present invention relates to a vibration damper for decoupling torsional vibration from components that are connected to each other so as to transmit a driving force. More particularly, the present invention relates to a vibration damper for decoupling the torsional vibration of a drive assembly and a secondary assembly. Such a damper is known from GB-A-203010.

### 2. Description of Related Art

DE 42 29 416 A1 describes a torsional-vibration damper with at least two structural elements that can rotate against the resistance of a least one helical compression spring that is pre-curved towards the axis of rotation. In each instance, the structural elements have contact areas for each end of the spring; these are used to compress the spring in the event of relative rotation between the two structural elements.

DE 40 30 285 A1 describes a similar torsional-vibration damper, in which helical compression springs are used to establish a rotary joint between two structural elements. The longitudinal axes of these helical compression springs are essentially tangential to the direction of rotation. The helical coil springs are essentially acted upon by compression during relative rotation between the two structural elements. Each helical coil spring has an associated friction element in order to damp out vibrational movements.

US 4,281,967 describes a device for damping the vibrations in an aircraft propeller. In this device, an annular weight is mounted concentrically on a rotor shaft. The weight is supported on helical compression springs that are arranged so as to be radial to the rotor axis. The inner ends of the helical compression springs are supported on a shaft section that is connected to the rotor shaft. The outer ends of the helical compression springs support the annular weight. The helical compression springs are dimensioned such that no significant deflection takes place during operation.

The known devices that are used to damp out torsional vibrations, such as the ones discussed above, share a number of disadvantages. First, they occupy a relatively large installed space in the engine on which they are employed. Second, they require a relatively large number of component parts. In addition, the reduction of torsional vibration is limited to a relatively narrow band of rotational speeds.

Especially in the case of large-capacity internal combustion engines with a small number of cylinders, the resulting uneven rotation of the crankshaft repeatedly leads to problems with the drive trains for accessory devices connected thereto. The accessory devices include items such as generators, oil pumps, water pumps, and the like. This problem is particularly acute if the driving force is transmitted by gears and not by belts. Because of their large installed size and the large number of parts contained within them, conventional torsional-vibration dampers are ill-suited for reducing vibrations that occur in the drive trains of the accessory devices in the internal combustion engines that contain them.

EP 0 374 766 B1 describes a free-wheel spring coupling in which a free-wheel spring is arranged on a shaft. The free-wheel spring is positioned coaxially with the axis of rotation. In one direction of rotation, all of the torque is transmitted. In the other direction of rotation, the windings of the free-wheel spring are separated and the free-wheel function is activated. Significantly, the free-wheel coupling is not suitable for achieving any noteworthy damping. Moreover, the free-wheel coupling fails to reduce torsional vibration.

US 4,081,062 describes a torque limiter that is used to connect a drive input shaft to a drive output shaft. The device has a shaft journal with a ramp-like groove in which pressure bodies engage. The pressure bodies and the shaft journal are held tightly against each other by a spring. Once a predefined torque is exceeded, the pressure bodies slide along the ramp in an annular groove so that torque is no longer transmitted between the pressure bodies and the shaft journal.

DE 36 26 347 A1 describes an overload coupling that is arranged between a rotary drive input element and a rotary drive output element. Rotary movement between the rotary drive input element and the rotary drive output element is transmitted through a roller that is supported in one element, and this roller is spring loaded and fits into a matching recess in the other element. If an overload torque is present, the roller is pressed out of the recess against the force of the spring, whereby relative torsion between the rotary drive input element and the rotary drive output element is made possible.

DE 37 30 939 A1 describes a starter motor gear for starting an engine, with a starter pinion that incorporates a number of centrifugally acting weights that are arranged within a circular recess in a coupling element. Each weight has an inclined surface that lies against a conical surface of a driven coupling element. The centrifugal weights act in such a way that they are displaced axially by the centrifugal force of the driving coupling element. It should be noted, however, that this device is not suitable for decoupling torsional vibration.

FR 2 575 799 A1 discloses a torque limiter for a longitudinal column. Two sections of the column are joined to one another by a spring loaded dog clutch. The dog clutch has two ramp bodies, each one having two ramps that are inclined toward one another. If the predefined maximum torque is exceeded, the ramps of the two ramp bodies slide toward one another, so that the two ramp bodies draw apart from each other against the force exerted by the spring and move into a position in which the rotary drive connection between the two line parts is interrupted. As with the device described in DE 37 30 939 A1, however, the device described in this patent is not designed as a torsional-vibration damper.

In summary, the prior art fails to describe a device that is simple in its design, occupies a small space, and effectively reduces torsional vibration between components connected to one another.

### SUMMARY OF THE INVENTION

For this reason, among others, it is an aspect of the present invention to effectively reduce torsional vibration between coupled components using a simple construction that occupies a small space.

This can be realized by a torsional-vibration damper for decoupling torsional vibration shown as background art and which may be provided between a drive assembly and a secondary assembly. The damper includes a first connector that is operatively connected to one of either the drive assembly and the secondary assembly. The first connector includes a hollow cylinder. A pressure body is connected to the first connector, and a second connector is operatively connected to the first connector, thereby permitting transmission of rotational motion therebetween. The damper also includes an axial displacement limiter that is associated with at least one of the first and second connector, and a ramp unit that includes a resilient member that is configured to store and release energy generated by axial displacement between the first and second connectors and a ramp body that is connected to the second connector. The ramp body includes a first ramp and a second ramp that are operatively interactive with the pressure body. The first and second ramps are inclined toward one another to define a stable position when the first and second ramps and the pressure body are pressed into engagement with one another by the resilient member. The first and the second connectors are rotatable with respect to one another through a predetermined angle of rotation measured from the stable position, and the axial displacement limiter limits a maximum rotation out of the stable position. The ramp unit is at least partially disposed within the hollow cylinder.

According to the approach described above, several objectives have been achieved, one of them being that the ramp body incorporates at least a first and a second ramp that work in conjunction with the pressure body. The two ramps-in a developed view-are inclined towards one another and define the stable rest position for the pressure body. The inclined ramps form a potential energy sink for the pressure parts. In other words, the pressure body and the ramp body are pressed against each other by the resilient member. The resilient member and the slope of the ramps are designed such that, in the event of torsional vibration, the pressure body is moved along the ramps out of the stable position. When out of the stable position, the resilient member is somewhat deformed elastically so that it momentarily absorbs the energy from the vibration peaks. Once the vibration peaks subside, the resilient member once again forces the pressure body into the stable position as defined by the energy sink. This flattens the vibration peaks so that torque is transmitted uniformly.

According to one aspect of the present invention a construction is provided where the pressure body is formed by at least one press pin that is preferably arranged so as to be normal to the longitudinal axis of the torsional-vibration damper and is connected rigidly to the first connector. The ramp body is arranged so as to be able to slide within the first connector. The design is particularly compact if the first and the second ramp are formed by a transverse hole in the ramp body, a provision preferably being made such that the transverse hole is essentially shaped as an isosceles triangle with rounded corners. The ramp body is pressed against the pressure body by the resilient member.

It is another aspect of the present invention to provide a torsional-vibration damper as defined in claim 1.

Thus, in one preferred embodiment of the present invention, the pressure body is connected to a second ramp body which includes at least a first and a second ramp. In this embodiment, the two ramps—as seen in a developed view—are configured so as to be inclined toward one another, in the same way as the ramps of the first ramp body. A particularly space-saving embodiment will result if the second ramp body is arranged so as to be able to slide within the first connector, and the second ramp body is rotatably connected to the first connector. It is preferred that a provision be made such that the pressure body includes a connector pin forming the rotary joint, the connector pin being normal to the longitudinal axis of the torsional-vibration damper, rigidly connected to the first connector, and positioned to pass through at least one slot in the second ramp body. The slot is also normal to the longitudinal axis of the torsional-vibration damper. The second ramp body, which is rotatably connected with the first connector, is pressed by the resilient member against the first ramp body, which is connected rigidly to the second connector. Rather than a rigid connection, the parts may be integrally formed with one another. The first and the second ramp bodies together form a positive and/or non-positive rotary joint such as a dog clutch.

Particularly simple production will result if at least one first ramp and at least one second ramp of each ramp body are configured symmetrically relative to a first plane of symmetry that contains the longitudinal axis of the torsional-vibration damper. In another embodiment of the present invention, a provision is made such that the ramp body incorporates two pairs of first and second ramps, and both pairs are arranged symmetrically to a second plane of symmetry that contains the axis of the torsional-vibration damper and is normal to the first plane of symmetry. It is also contemplated that there may be more than two pairs of first and second ramps.

A further aspect of the invention contemplates that the pitches of the first and second ramps may be selected to complement the operating characteristics of the engine's transmission. In particular, while an entirely linear pitch may be employed, ramps with increasing or decreasing pitches may also be used. Also, the ramps may be provided with different pitches, one for each of the rotational directions.

It is another aspect of at least one embodiment of the present invention that the ramps are arranged in a way so as to enable the device to transmit torque in both rotating directions while dampening or decoupling the transmission of torsional vibrations. According to a preferred embodiment, by having the ramp unit at least partially disposed in the hollow cylinder in the first connector, a very compact and efficient design of the decoupler can be provided. The hollow cylinder as defined herein is not limited to a cylinder with a substantially circular cross-section, but is defined as including other cross-sectional shapes, including but not limited to square, rectangular, elliptical, and polygonal shapes.

The torsional-vibration damper of the present invention may be coupled to the crankshaft via a gear to transmit torque from the crankshaft to the generator shaft to allow the generator to produce electric power. By using an external generator, which is capable of producing considerably more electric power than internal generators (provided on the crankshaft), considerably more electric energy can be provided, which is demanded for various electrically driven components, such as heaters. Because external generators consume considerable space, it is difficult to conform with the compact design of the engine.

Engines, especially those in the recreational products business, which are developed to maximize power output, produce noteworthy vibrations, which need to be dampened. With the vibration decoupler of the present invention, a person of ordinary skill in the art will not only be in a position to reliably and effectively dampen the vibrations of powerful engines, but will also be able to provide a compact engine power pack layout, since the vibration decoupler of the present invention features a unique, compact and functional design.

The torsional-vibration damper of the present invention may also be used for engines, such as internal combustion engines (2- or 4-strokes), or other mechanical devices where torque is transmitted. According to preferred embodiments of the invention, the torsional-vibration damper can be used on an engine tor transmitting torque to or from a auxiliary unit such as a generator, a charger, a starter or another device. Accordingly, at least one embodiment of the present invention may be applied to recreational vehicles, including but not limited to motorcycles, snowmobiles, all terrain vehicles, personal watercraft, sportboats, go-karts (outdoor or indoor), and aircraft. This is because of the significance of the compact arrangement that is required by such vehicles.

Other aspects of the present invention will be made apparent by the drawings appended hereto and by the description of the embodiments presented hereinbelow.

### BRIEF DESCRIPTION OF THE DRAWINGS

The invention will be described in conjunction with the following drawings in which like reference numerals designate like elements and wherein fig. 1 to fig. 5 describe an embodiment relating to background art and wherein:

Fig. 1 is a cross-sectional, side view of a torsional-vibration damper according to an embodiment of the present invention;

Fig. 2 is an end view of a second connector of the torsional-vibration damper of Fig. 1;

Fig. 3 is a cross-sectional, side view of the second connector taken along section line III-III in Fig. 2;

Fig. 4 is a cross-sectional, side view of the second connector taken along section line IV-IV in Fig. 2;

Fig. 5 is an exterior side view of the second connector in a developed view;

Fig. 6 is a cross-sectional, side view of a torsional-vibration damper according to another embodiment of the present invention;

Fig. 7 is an end view of a second connector of the torsional-vibration damper of Fig. 6;

Fig. 8 is a cross-sectional, side view of the second connector taken along section line VIII-VIII in Fig. 7;

Fig. 9 is a cross-sectional, side view of the second connector taken along section line IX-IX in Fig. 7;

Fig. 10 a schematic view of a first ramp and a second ramp of the second connector in a developed view;

Fig. 11 is an end view of a first connector of the torsional-vibration damper of Fig. 6;

Fig. 12 is a cross-sectional, side view of the first connector taken along section line XII-XII in Fig. 11;

Fig. 13 is a side exterior view of the second connector;

Fig. 14 is a schematic view of a first ramp and a second ramp of the first connector in a developed view; and

Fig. 15 is a cross-sectional view of a torsional-vibration damper according to another embodiment of the present invention.

### DETAILED DESCRIPTION OF PREFERRED EMBODIMENTS OF THE INVENTION

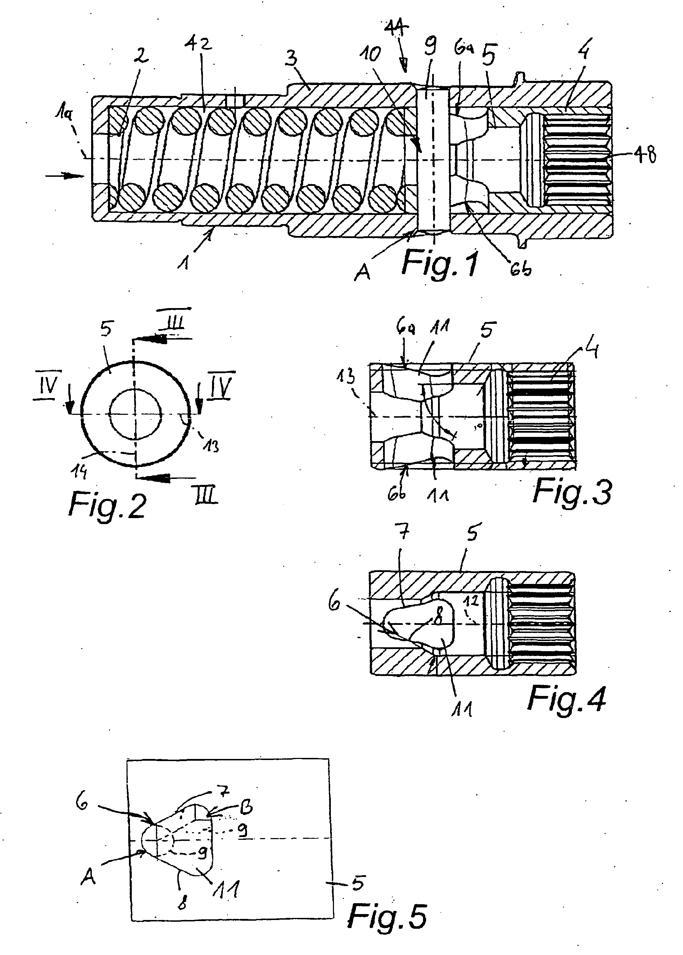

A torsional-vibration damper 1, or vibration decoupler, will now be described in connection with Figs. 1-5. The damper 1 includes a first connector 3. As shown in Fig. 1, the first connector 3 has a hollow construction. The first connector 3 preferably includes a hollow cylindrical body 42, or hollow cylinder. The hollow cylinder 42 as defined herein is not limited to a cylinder with a substantially circular cross-section, but is defined as including other cross-sectional shapes, including but not limited to square, rectangular, elliptical, and polygonal shapes.

The damper 1 also includes a ramp unit 44 that, as explained in further detail below, is provided to transform energy resulting from torsional spikes created during the rotation of components that are connected to one another via the damper 1, by storing any excess energy and releasing it thereafter. The ramp unit 44 includes a resilient member 2 and a ramp body 5 that is at least partially disposed within the hollow cylinder 42 such that the resilient member 2 is at least partially disposed within the first connector 3.

The resilient member 2 can be a spring or any other member that is configured to store and release energy, including but not limited to any pneumatic or hydraulic device capable of providing this effect. While a compression coil spring is illustrated, it is contemplated that other types of springs may be used in the alternative, including but not limited to disk springs or the like. The use of a disk spring will reduce the over size of the damper 1.

As would be appreciated by those skilled in the art, other resilient member types also may be employed. The resilient member 2 is at least partially disposed within the first connector 3 which will provide additional stability for the resilient member 2. For example, if the resilient member 2 is a coil spring, the first connector 3 will prevent any inappropriate transversal (normal to a longitudinal axis 1a of the damper 1) movement of the spring.

The first connector 3 is connected to a second connector 4 so as to transmit a driving force from the first connector 3 to the second connector 4. Using such a torsional-vibration damper 1, it is possible, for example, to drive a generator (not shown herein) from an internal combustion engine. Preferably the vibration damper 1 is operatively connected to a crankshaft or to an output shaft of the internal combustion engine by the first connector 3, while the second connector 4 is operatively connected to the generator via a generator shaft.

The ramp body 5 is preferably manufactured integrally with the second connector 4. While an integral construction is preferred, it is contemplated that the ramp body 5 and the second connector 4 also may be two parts that are connected so as to transmit a driving force. The ramp body 5 has two pairs of surfaces 6a and 6b. Each surface pair has a first ramp 7 and a second ramp 8. It is also contemplated that there may be more than two pairs of first and second ramps 7, 8, as would be appreciated by those skilled in the art.

As shown in Figs. 1-5, the first ramp 7 and the second ramp 8 may be formed by a hole 11 in the ramp body 5. The hole 11 is essentially shaped as an isosceles triangle, as can be seen in Figs. 4-5. The ramp body 5 is loaded in the axial direction by the resilient member 2.

A pressure body 10 that is formed by a press pin 9 is connected rigidly with the first connector 3. As illustrated, the press pin 9 is transverse to the axis 1a of the torsional-vibration damper 1. The press pin 9 passes through the hole 11 in the ramp body 5, and is of a cross section that is essentially smaller than the cross section of the hole 11.

When forces are transferred uniformly, the press pin 9 is in the stable position A that is shown in Fig. 5. When in the stable position A, rotary movement is transmitted between the first connector 3 and the second connector 4 through the press pin 9 and the ramps 7, 8. Should the magnitude of the torque spike deviate from a uniform value (i.e., exceed a predetermined threshold amount), the ramp body 5 will be moved relative to the pressure body 9, out of the stable position A, shown in Fig. 5, and will slide along one of the two ramps 7, 8 as is shown at position B in Figure 5. The ramp body 5 twists relative to the press pin 9 and to the first connector 3 and is displaced in the radial direction against the force of the resilient member 2. Thus, in the event of a torque spike, the excess energy is stored momentarily in the resilient member 2 and immediately thereafter released and passed on to the ramp body 5. Torque spikes can be effectively smoothed out in this way, thereby ensuring uniform transmission of torque between the first connector 3 and the second connector 4. Since the ramp body 5 can move in the longitudinal direction, an appropriate toothing 48 is provided on the second connector 4, which will enable an adequate connection of the second connector 4 to any driven device, including but not limited to a gear of a generator.

In this case, the first ramp 7 and the second ramp 8 are symmetrical with reference to a plane of symmetry 12 that contains the axis 1a of the torsional-vibration damper. The pairs of surfaces 6a and 6b are, in their turn, symmetrical relative to a second plane of symmetry that is normal to the first plane of symmetry 12. As would be appreciated by those skilled in the art, however, the first and second ramps 7, 8 and the pairs of surfaces 6a, 6b may be asymmetrical as well. An asymmetrical construction is also possible.

Both the first ramp 7 and the second ramp 8 may be arranged so as to be spaced around the periphery of the hole 11. In order to achieve simple production and effective damping of vibration, it is, however, advantageous if the ramp body 5 is essentially in the form of a wedge. Naturally, those skilled in the art will appreciate other constructions.

Tests have shown that the best results may be achieved if, when they are deployed, the first ramp 7 and the second ramp 8 of the ramp body 5 subtend an opening angle α of about 80° to 140°, preferably between about 110° and about 120°, and most preferably of about 110°. The angle α is measured using a developed view of the ramp body 5. It is understood that the developed view is created by projecting surfaces of the ramps 7, 8 onto a plane such that curved surfaces may be represented by straight lines and the angle α may be accurately measured. A stop for the movement of the ramp body 5 is provided by the dimension of the hole 11, since the hole 11, in conjunction with the ramps 7, 8, will limit the movement of the press pin 9 and thereby the movement of the ramp body 5.

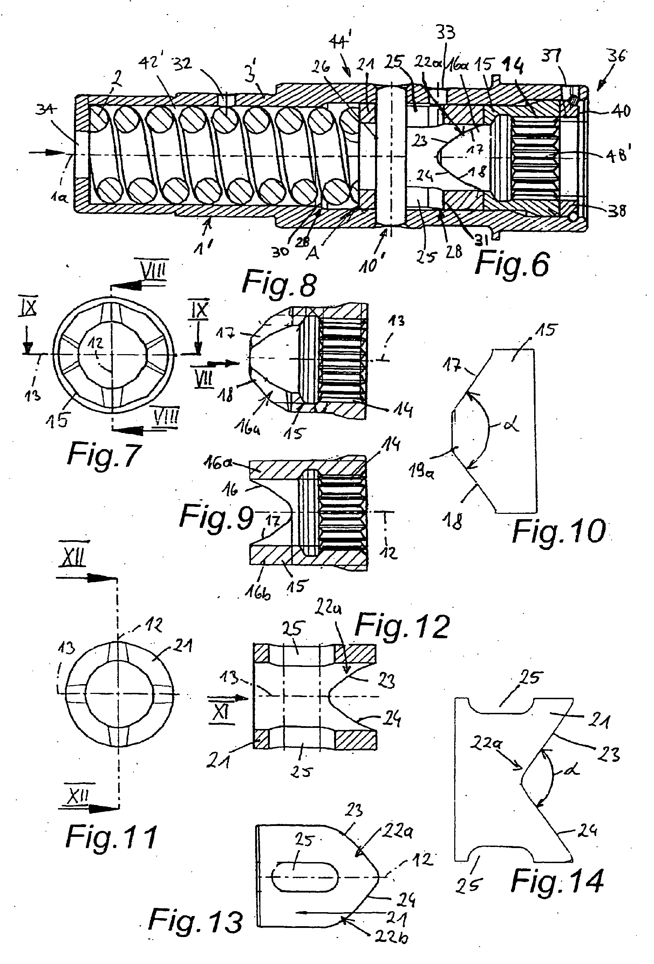

Figs. 6-14 show a torsional-vibration damper 1' in accordance with one embodiment of the present invention. The torsional-vibration damper 1' includes a first connector 3' and a second connector 14. This embodiment differs from the approach shown in Figs. 1-5 in that a ramp unit 44' also includes a second ramp body 21, in addition to the resilient member 2 and a first ramp body 15. The first ramp body 15 essentially forms a dog clutch with the second ramp body 21. The resilient member 2 presses the second ramp body 21 against the first ramp body 15 in the axial direction.

In the embodiment illustrated in Figs. 6-14, the first ramp body 15 has two pairs of surfaces 16a, 16b, each with a first ramp 17 and a second ramp 18. The first ramp 17 and the second ramp 18 are formed so as to be wedge-shaped to each other. The first and second ramps 17, 18 subtend an angle α of approximately 110° in the developed view of the embodiment shown in Fig. 10. As discussed above, however, a wider range of angular arrangements is contemplated to fall within the scope of the present invention. The second ramp body 21 also has two pairs of surfaces 22a, 22b with a first ramp 23 and a second ramp 24. The ramps 23, 24-like the ramps 17, 18 in the first ramp body 15-subtend an angle α of about 110°, as is shown by the developed view of the second ramp body 21 in Fig. 14.

The damping behavior of the torsional-vibration damper 1, 1' can be very simply predefined by the characteristic curve of the resilient member 2 and the slope of the ramps 7, 8, 17, 18, 23, 24. The angle α can thus vary widely from about 110° as a function of the stiffness of the resilient member 2, and can lie, for example, between about 80° and about 140°.

The second ramp body 21 preferably includes a transverse hole 25 in the shape of an elongated slot that is normal to the axis 1a of the torsional-vibration damper 1'. A pressure body 10' includes a connecting pin 26 that is joined rigidly to the first connector 3' and is disposed within the elongated slot 25. According to a preferred embodiment, the second ramp body 21 is supported so as to slide longitudinally within the first connector 3', which is preferably in the form of a hollow cylinder 42'. The second ramp body 21 is connected through the connecting pin 26 to the first connector 3' so as to transmit a driving force therefrom (or thereto). The connecting pin 26 is guided in the elongated slot 25 within the second ramp body 21.

In the case of a uniform drive between the first connector 3' and the second connector 14, the first ramp body 15 and the second ramp body 21 are in the stable position A, as shown in Fig. 6. If peaks occur in the torque (i.e., deviations from a uniform torque), the first ramp 23 and the second ramp 24 of the second ramp body 21 slide along the first ramp 17 and the second ramp 18 of the first ramp body 15. A slight relative twisting takes place between the first ramp body 15 and the second ramp body 21, and the second ramp body 21 is displaced in the axial direction against the force of the resilient member 2. This means that the energy for a torque peak is absorbed briefly by the resilient member 2. Immediately after the torque peak, the resilient member 2 dissipates the energy and the second ramp body 21 slides axially into the stable position A. The stable position A, therefore, represents a sink for the potential energy stored in the resilient member 2. Torque peaks can be effectively smoothed out in this way, and a uniform transmission of force between the first connector 3' and the second connector 14 is ensured.

An axial displacement limiter 28 that is associated with at least one of the first connector 3' and the second connector 14 is also provided. As shown in Fig. 6, the axial displacement limiter 28 includes a stop 30 that is disposed in the first connector 3' and provides a dead stop for the ramp body 21 so that the ramp body 21, cannot move any further into the first connector 3'. The axial displacement limiter 28 may also include an end 31 of the elongated slot 25 within the second ramp body 21 such that when the connecting pin 26 reaches the end 31 of the elongated slot 25, the second ramp body 21 cannot move any further into the first connector 3'. Preferably, the axial displacement limiter 28 includes both the stop 30 and the end 31 of the elongated slot 25 within the ramp body 21 such that the connecting pin 26 reaches the end 31 of the elongated slot 25 at the same time the ramp body 21' reaches the stop 30.

Due to the compact and integrated design of the damper 1' of the present invention, bearings or other devices can be directly disposed on the first connector 3'. These devices can then be easily supplied with lubrication, such as oil, through openings 32, 33, 34 in the first connector 3', as shown in Fig. 6. Thus, the openings 32, 33, 34 may be used for transferring oil into and/or out of the damper 1' for lubricating or cooling components of the damper 1' or for providing lubrication for bearings or other devices disposed in the vicinity of the damper 1'. For example, the opening 34 may be used to provide lubrication to the interior of the damper 1'. Lubrication from the interior of the damper 1' may then be provided, via the opening 32, to a needle bearing (not shown) that is disposed on the damper 1'. Also, the opening 33 may be used to provide lubrication to the ramps 17, 18, 23, 24 on the ramp bodies 15, 21.

In at least one embodiment, a retaining element 36 is also provided, as shown in Fig. 6. The retaining element 36 includes a cone sheave 38 and a retaining ring 40. As shown, the retaining ring 40 is disposed within the first connector 3' such that the first ramp body 15 is supported by the first connector 3' and is fixed in the axial direction. This contributes to the compact design of the damper 1'. By locating an opening 37 adjacent to the location of the retaining element 36, the retaining element 36 may be easily removed by inserting a tool into the opening 37. However, as would be appreciated by one of ordinary skill in the art, any other retaining element for securing the first ramp body 15 against axial movement is possible. As shown in Fig. 6, the first ramp body 15 is secured by the retaining element 36 to the first connector 3' which enables a particularly compact and easy design.

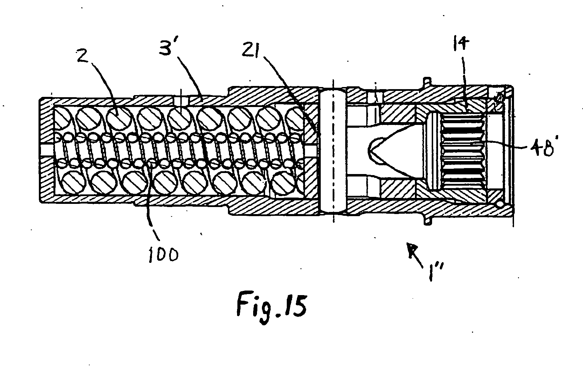

Fig. 15 shows a further embodiment of a torsional-vibration damper 1" of the present invention. In this embodiment, the resilient member 2 is reinforced by an additional resilient member 100 such that the damping effect of the two resilient members 2, 100 is additive. In one particular embodiment, this additional resilient member 100 is disposed within the resilient member 2 and is clamped between the pressure body 21 and the first connector 3', in the same manner as the resilient member 2. Of course, as would be appreciated by those skilled in the art, the resilient members 2, 100 could be disposed in a side-by-side arrangement. Because of the combined arrangement of the two resilient members 2, 100, even high-amplitude torsional vibration can be damped by the addition of the spring constants of the two resilient members.

It is also contemplated that the two resilient members 2, 100 may be disposed such that the resilient members 2, 100 act in series. If the resilient members 2, 100 have different spring constants, such an arrangement will allow the damper 1" to have two distinct torsional thresholds. In other words, the first resilient member would dampen torsional spikes in excess of a first predetermined threshold and the second resilient member would assist if the torsional threshold exceeded a second, higher predetermined threshold.

The torsional-vibration damper 1, 1', 1'' of the present invention may be coupled to the crankshaft via a gear to transmit torque from the crankshaft to the first connector 3, 3', thereby providing a decoupled transmission of the torque to the second connector 4, 14 and to an auxiliary device, such as a generator, which may produce electric power, for example. The generator can be coupled by a gearing to the second connector 4, 14. According to a preferred embodiment, the second connector 4, 14 includes an internal toothing 48, 48' for that purpose. By using an external generator, which is capable of producing much more electric power than internal generators (provided on the crankshaft), much more electric energy can be provided, which is in demand by various electrically driven components, such as heaters. Because external generators consume considerable space, it is difficult to position them in a compact engine design.

Engines, especially those in the recreational products business, are developed to maximize power output. Typically, they also produce noteworthy vibrations, which need to be dampened. With the damper 1, 1', 1'' of the present invention, a person of ordinary skill in the art will not only be in a position to reliably and effectively dampen the vibrations of powerful engines, but will also be able to provide a compact engine power pack layout, since the torsional-vibration damper 1, 1', 1'' of the present invention features a unique, compact and functional design.

The torsional-vibration damper 1, 1', 1'' of the present invention may also be used for engines, such as internal combustion engines (2- or 4-strokes), or other mechanical devices where torque is transmitted. According to preferred embodiments of the invention, the damper 1, 1', 1'' can be used on an engine for transmitting torque to a auxiliary unit such as a generator, a charger, or another device. Accordingly, at least one embodiment of the present invention may be applied to recreational vehicles, including but not limited to motorcycles, snowmobiles, all terrain vehicles, personal watercraft, sportboats, go-karts (outdoor or indoor), and aircraft. This is because of the significance of the compact arrangement that is required by such vehicles.

The advantages of the torsional-vibration damper 1, 1', 1'' that have been described heretofore are such that reliable reduction of vibration is made possible in a small space, with only a few parts, and in a manner that is simple from the standpoint of production technology.

## Claims

1. A torsional-vibration damper for decoupling torsional vibration from a first rotational assembly and a secondary rotational assembly, comprising:
a first connector (3') operatively connected to the first rotational assembly, the first connector comprising a hollow cylinder;
a second connector (14) being operatively connected to the secondary rotational assembly as to permit transmission of rotational motion between the first and the secondary rotational assembly;
an axial displacement limiter (28) associated with at least one of the first and the second connectors; and
a ramp unit (44) comprising
a resilient member (2) configured to store and release energy generated by torsional vibration between the first and the second connectors;
a first ramp body (15) connected to the second connector, the first ramp body comprising a first ramp (17) and a second ramp (18); and
a second ramp body (21) connected to the first connector, the second ramp body comprising a third ramp (23) and a fourth ramp (24) operatively interactive with the first and second ramps of the first ramp body, the first and the second ramp and the third and the fourth ramp being inclined toward one another to define a stable position of the first and the second ramp body when the first and the second ramp body are pressed into engagement with one another by the resilient member,
wherein the first and the second connectors are rotatable with respect to one another through a predetermined angle of rotation measured from the stable position,
wherein the axial displacement limiter (28) limits a maximum rotation out of the stable position, and wherein the resilient member (2) and the ramp unit (44') are at least partially disposed within the hollow cylinder of the first connector (3) **characterized in that,**
the second connector (14) is operatively connected to the first rotational assembly via the hollow cylinder, **in that**
a pressure body (10') is connected to the first connector and **in that** the second ramp body (21) is connected to the first connector via the pressure body (10').

2. The torsional-vibration damper as defined by claim 1, **characterized in that** the resilient member is a spring.

3. The torsional-vibration damper as defined by claim 1 or 2, **characterized in that** the second ramp body is configured to be axially displaceable within the first connector.

4. The torsional-vibration damper as defined by one of claims 1 to 3, **characterized in that** the second ramp body is rotatably connected to the first connector.

5. The torsional-vibration damper as defined by one of claims 1 to 4, **characterized in that** the pressure body comprises a rotary joint being formed by a connector pin that is disposed normal to a longitudinal axis of the torsional-vibration damper and is rigidly connected to the first connector, the connector pin passing through at least one elongated slot that is disposed within the second ramp body, normal to the longitudinal axis of the torsional-vibration damper.

6. The torsional-vibration damper as defined by one of claims 1 to 5, **characterized in that** the first and the second ramp bodies together form a dog clutch.

7. The torsional-vibration damper as defined by one of claims 1 to 6, **characterized in that** the first ramp body is rigidly connected to the second connector.

8. The torsional-vibration damper as defined by one of claims 1 to 7, **characterized in that** the first ramp body is integrally formed with the second connector.

9. The torsional-vibration damper as defined by one of claims 1 to 8, **characterized in that** the first ramp and the second ramp of each ramp body are symmetrically disposed around a first plane of symmetry that contains a longitudinal axis of the torsional-vibration damper.

10. The torsional-vibration damper as defined by one of claims 1 to 9, **characterized in that** each ramp body further comprises an additional pair of ramps, the additional pair of ramps being symmetrically disposed around a second plane of symmetry that contains a longitudinal axis of the torsional-vibration damper and is normal to the first plane of symmetry.

11. The torsional-vibration damper as defined by one of claims 1 to 10, characteri zed in that the first ramp and the second ramp of the first ramp body and the third and the fourth ramp of the second ramp body subtend an angle that is between 80° and 140°.

12. The torsional-vibration damper as defined by one of claims 1 to 11, **characterized in that** the hollow cylinder comprises one or more openings to transfer lubricant into and/or out of the hollow cylinder.

13. A torsional-vibration dampening unit comprising the torsional-vibration damper as defined by one of claims 1 to 12, **characterized in that** a bearing is disposed on the first connector.

14. A torsional-vibration dampening unit comprising the torsional-vibration damper as defined by claim 12, **characterized in that** a bearing is disposed on the first connector and the bearing is supplied by lubricant through the one or more openings.

15. An internal combustion engine comprising the torsional-vibration damper as defined by one of claims 1 to 12.

16. The internal combustion engine as defined by claim 15, **characterized in that** the internal combustion engine is operating on a 4-stroke principle.

17. An internal combustion engine as defined by claim 15 or 16, **characterized in that** the internal combustion engine further comprises an auxiliary unit and the torsional-vibration damper transmits torque from or to the auxiliary unit.

18. An internal combustion engine as defined by claim 17, **characterized in that** the auxiliary unit is a generator for generating electrical power.

19. A recreational vehicle comprising the internal combustion engine as defined by one of claims 15 to 18.

20. A snowmobile comprising the internal combustion engine as defined by one of claims 15 to 18.

## Patentansprüche

1. Drehschwingungsdämpfer zur Entkopplung von Drehschwingungen von einer ersten Rotationsanordnung und einer zweiten Rotationsanordnung, der Folgendes umfasst:
einen erste Verbinder (3'), der mit der ersten Rotationsanordnung wirkverbunden ist, wobei der erste Verbinder einen Hohlzylinder umfasst;
einen zweiten Verbinder (14), der mit der Sekundärrotationsanordnung wirkverbunden ist, um die Übertragung von Drehbewegung zwischen der ersten und der Sekundärrotationsanordnung zu gestatten;
einen Axialverschiebungsbegrenzer (28), der dem ersten und/oder zweiten Verbinder zugeordnet ist;
eine Rampeneinheit (44), die Folgendes umfasst:
ein elastisches Glied (2), das zur Speicherung und Abgabe von durch Drehschwingungen zwischen dem ersten und dem zweiten Verbinder erzeugter Energie konfiguriert ist;
einen ersten Rampenkörper (15), der mit dem zweiten Verbinder verbunden ist und eine erste Rampe (17) und eine zweite Rampe (18) umfasst; und
einen zweiten Rampenkörper (21), der mit dem ersten Verbinder verbunden ist, wobei der zweite Rampenkörper eine dritte Rampe (23) und eine vierte Rampe (24) umfasst, die mit der ersten und der zweiten Rampe des ersten Rampenkörpers zusammenwirken, wobei die erste und die zweite Rampe und die dritte und die vierte Rampe zueinander geneigt sind, um eine stabile Position des ersten und des zweiten Rampenkörpers zu definieren, wenn der erste und der zweite Rampenkörper durch das elastische Glied in Eingriff miteinander gepresst werden,
wobei der erste und der zweite Verbinder bezüglich einander um einen vorbestimmten, aus der stabilen Position gemessenen Drehwinkel drehbar sind,
wobei der Axialverschiebungsbegrenzer (28) eine maximale Drehung aus der stabilen Position begrenzt und wobei das elastische Glied (2) und die Rampeneinheit (44') zumindest teilweise in dem Hohlzylinder des ersten Verbinders (3) angeordnet sind, **dadurch gekennzeichnet, dass**
der zweite Verbinder (14) über den Hohlzylinder mit der ersten Rotationsanordnung wirkverbunden ist,
ein Druckkörper (10') mit dem ersten Verbinder verbunden ist und
der zweite Rampenkörper (21) über den Druckkörper (10') mit dem ersten Verbinder verbunden ist.

2. Drehschwingungsdämpfer nach Anspruch 1, **dadurch gekennzeichnet, dass** das elastische Glied eine Feder ist.

3. Drehschwingungsdämpfer nach Anspruch 1 oder 2, **dadurch gekennzeichnet, dass** der zweite Rampenkörper axial verschiebbar im ersten Verbinder konfiguriert ist.

4. Drehschwingungsdämpfer nach einem der Ansprüche 1 bis 3, **dadurch gekennzeichnet, dass** der zweite Rampenkörper drehbar mit dem ersten Verbinder verbunden ist.

5. Drehschwingungsdämpfer nach einem der Ansprüche 1 bis 4, **dadurch gekennzeichnet, dass** der Druckkörper ein Drehgelenk umfasst, das durch einen Verbindungsstift gebildet wird, der normal zur Längsachse des Drehschwingungsdämpfers angeordnet und starr mit dem ersten Verbinder verbunden ist, wobei sich der Verbindungsstift mindestens durch einen länglichen Schlitz erstreckt, der in dem zweiten Rampenkörper normal zur Längsachse des Drehschwingungsdämpfers ausgebildet ist.

6. Drehschwingungsdämpfer nach einem der Ansprüche 1 bis 5, **dadurch gekennzeichnet, dass** der erste und der zweite Rampenkörper zusammen eine Klauenkupplung bilden.

7. Drehschwingungsdämpfer nach einem der Ansprüche 1 bis 6, **dadurch gekennzeichnet, dass** der erste Rampenkörper starr mit dem zweiten Verbinder verbunden ist.

8. Drehschwingungsdämpfer nach einem der Ansprüche 1 bis 7, **dadurch gekennzeichnet, dass** der erste Rampenkörper integral mit dem zweiten Verbinder ausgebildet ist.

9. Drehschwingungsdämpfer nach einem der Ansprüche 1 bis 8, **dadurch gekennzeichnet, dass** die erste Rampe und die zweite Rampe jedes Rampenkörpers symmetrisch um eine erste Symmetrieebene angeordnet sind, die eine Längsachse des Drehschwingungsdämpfers enthält.

10. Drehschwingungsdämpfer nach einem der Ansprüche 1 bis 9, **dadurch gekennzeichnet, dass** jeder Rampenkörper weiterhin ein zusätzliches Rampenpaar umfasst, wobei das zusätzliche Rampenpaar um eine zweite Symmetrieebene angeordnet ist, die eine Längsachse des Drehschwingungsdämpfers enthält und normal zur ersten Symmetrieebene verläuft.

11. Drehschwingungsdämpfer nach einem der Ansprüche 1 bis 10, **dadurch gekennzeichnet, dass** die erste Rampe und die zweite Rampe des ersten Rampenkörpers und die dritte und die vierte Rampe des zweiten Rampenkörpers einen Winkel zwischen 80° und 140° einschließen.

12. Drehschwingungsdämpfer nach einem der Ansprüche 1 bis 11, **dadurch gekennzeichnet, dass** der Hohlzylinder eine oder mehrere Öffnungen zum Leiten von Schmiermittel in den und/oder aus dem Hohlzylinder umfasst.

13. Drehschwingungsdämpfungseinheit, die den Drehschwingungsdämpfer nach einem der Ansprüche 1 bis 12 umfasst, **dadurch gekennzeichnet, dass** ein Lager am ersten Verbinder angeordnet ist.

14. Drehschwingungsdämpfungseinheit, die den Drehschwingungsdämpfer nach Anspruch 12 umfasst, **dadurch gekennzeichnet, dass** ein Lager am ersten Verbinder angeordnet ist und das Lager durch die eine oder die mehreren Öffnungen mit Schmiermittel versorgt wird.

15. Verbrennungsmotor, der den Drehschwingungsdämpfer nach einem der Ansprüche 1 bis 12 umfasst.

16. Verbrennungsmotor nach Anspruch 15, **dadurch gekennzeichnet, dass** der Verbrennungsmotor nach einem 4-Takt-Prinzip arbeitet.

17. Verbrennungsmotor nach Anspruch 15 oder 16, **dadurch gekennzeichnet, dass** der Verbrennungsmotor weiterhin eine Zusatzeinheit umfasst und der Drehschwingungsdämpfer Drehmoment von oder zu der Zusatzeinheit überträgt.

18. Verbrennungsmotor nach Anspruch 17, **dadurch gekennzeichnet, dass** die Zusatzeinheit ein Generator zur Erzeugung von elektrischer Energie ist.

19. Freizeitfahrzeug, das den Verbrennungsmotor nach einem der Ansprüche 15 bis 18 umfasst.

20. Schneemobil, das den Verbrennungsmotor nach einem der Ansprüche 15 bis 18 umfasst.

## Revendications

1. Amortisseur de vibrations de torsion destiné à découpler des vibrations de torsion provenant d'un premier ensemble en rotation et d'un second ensemble en rotation, comprenant :
un premier dispositif d'assemblage (3') relié fonctionnellement au premier ensemble en rotation, le premier dispositif d'assemblage comprenant un cylindre creux,
un second dispositif d'assemblage (14) relié fonctionnellement au second ensemble en rotation de façon à permettre la transmission d'un mouvement de rotation entre le premier et le second ensemble en rotation,
un limiteur de déplacement axial (28) associé à au moins un des premier et second dispositifs d'assemblage, et
une unité de rampes (44) comprenant
un élément élastique (2) configuré pour stocker et
libérer de l'énergie générée par les vibrations de torsion entre les premier et second dispositifs d'assemblage,
un premier corps de rampes (15) relié au second dispositif d'assemblage, le premier corps de rampes comprenant une première rampe (17) et une seconde rampe (18), et
un second corps de rampes (21) relié au premier dispositif d'assemblage, le second corps de rampes comprenant une troisième rampe (23) et une quatrième rampe (24) interactives fonctionnellement avec les première et seconde rampes du premier corps de rampes, la première et la seconde rampe ainsi que la troisième et la quatrième rampe étant inclinées l'une vers l'autre afin de définir une position stable du premier et du second corps de rampes lorsque le premier et le second corps de rampes sont comprimés pour se mettre en prise l'un avec l'autre par l'élément élastique,
dans laquelle les premier et second dispositifs d'assemblage peuvent tourner l'un par rapport à l'autre d'un angle prédéterminé de rotation mesuré depuis la position stable,
dans laquelle le limiteur de déplacement axial (28) limite une rotation maximale hors de la position stable et dans laquelle l'élément élastique (2) et l'unité de rampes (44') sont au moins partiellement placées à l'intérieur du cylindre creux du premier dispositif d'assemblage (3) **caractérisé en ce que,**
le second dispositif d'assemblage (14) est relié fonctionnellement au premier ensemble en rotation par l'intermédiaire du cylindre creux, **en ce que**
un corps sous pression (10') est relié au premier dispositif d'assemblage et **en ce que** le second corps de rampes (21) est relié au premier dispositif d'assemblage via le corps sous pression (10').

2. Amortisseur de vibrations de torsion selon la revendication 1, **caractérisé en ce que** l'élément élastique est un ressort.

3. Amortisseur de vibrations de torsion selon la revendication 1 ou 2, **caractérisé en ce que** le second corps de rampes est configuré pour pouvoir être déplacé axialement à l'intérieur du premier dispositif d'assemblage.

4. Amortisseur de vibrations de torsion selon l'une des revendications 1 à 3, **caractérisé en ce que** le second corps de rampes est relié avec une possibilité de rotation au premier dispositif d'assemblage.

5. Amortisseur de vibrations de torsion selon l'une des revendications 1 à 4, **caractérisé en ce que** le corps sous pression comprend un joint tournant formé par une broche du dispositif d'assemblage qui est placée perpendiculairement à un axe longitudinal de l'amortisseur de vibrations de torsion et qui est raccordée de manière rigide au premier dispositif d'assemblage, la broche de dispositif d'assemblage traversant au moins une fente allongée qui est disposée à l'intérieur du second corps de rampes, perpendiculaire à l'axe longitudinal de l'amortisseur des vibrations de torsion.

6. Amortisseur de vibrations de torsion selon l'une des revendications 1 à 5, **caractérisé en ce que** les premier et second corps de rampes forment ensemble un embrayage à griffes.

7. Amortisseur de vibrations de torsion selon l'une des revendications 1 à 6, **caractérisé en ce que** le premier corps de rampes est raccordé de manière rigide au second dispositif d'assemblage.

8. Amortisseur de vibrations de torsion selon l'une des revendications 1 à 7, **caractérisé en ce que** le premier corps de rampes est façonné en une seule pièce avec le second dispositif d'assemblage.

9. Amortisseur de vibrations de torsion selon l'une des revendications 1 à 8, **caractérisé en ce que** la première rampe et la seconde rampe de chaque corps de rampes sont disposées symétriquement autour d'un premier plan de symétrie qui contient un axe longitudinal de l'amortisseur de vibrations de torsion.

10. Amortisseur de vibrations de torsion selon l'une des revendications 1 à 9, **caractérisé en ce que** chaque corps de rampes comprend en outre une paire supplémentaire de rampes, la paire supplémentaire de rampes étant disposée symétriquement autour d'un second plan de symétrie qui contient un axe longitudinal de l'amortisseur de vibrations de torsion et qui est perpendiculaire au premier plan de symétrie.

11. Amortisseur de vibrations de torsion selon l'une des revendications 1 à 10, **caractérisé en ce que** la première rampe et la seconde rampe du premier corps de rampes, ainsi que la troisième et la quatrième rampe du second corps de rampes se trouvent opposées d'un angle compris entre 80° et 140°.

12. Amortisseur de vibrations de torsion selon l'une des revendications 1 à 11, **caractérisé en ce que** le cylindre creux comprend une ou plusieurs ouvertures permettant de transférer du lubrifiant dans et/ou hors du cylindre creux.

13. Unité d'amortissement de vibrations de torsion comprenant l'amortisseur de vibrations de torsion défini par l'une des revendications 1 à 12, **caractérisée en ce qu'**un palier est placé sur le premier dispositif d'assemblage.

14. Unité d'amortissement de vibrations de torsion comprenant l'amortisseur de vibrations de torsion défini dans la revendication 12, **caractérisée en ce qu'**un palier est disposé sur le premier dispositif d'assemblage et que le palier est lubrifié par l'intermédiaire d'une ou de plusieurs ouvertures.

15. Moteur à combustion interne comprenant l'amortisseur de vibrations de torsion défini par l'une des revendications 1 à 12.

16. Moteur à combustion interne selon la revendication 15, **caractérisé en ce que** le moteur à combustion interne fonctionne sur quatre temps.

17. Moteur à combustion interne selon la revendication 15 ou 16, **caractérisé en ce que** le moteur à combustion interne comprend en outre une unité auxiliaire et **en ce que** l'amortisseur de vibrations de torsion transmet le couple depuis ou vers l'unité auxiliaire.

18. Moteur à combustion interne selon la revendication 17, **caractérisé en ce que** l'unité auxiliaire est une génératrice permettant de générer de l'énergie électrique.

19. Véhicule de plaisance comprenant le moteur à combustion interne défini par l'une des revendications 15 à 18.

20. Motoneige comprenant le moteur à combustion interne défini par l'une des revendications 15 à 18.
